# EUROPEAN PATENT SPECIFICATION

(11) **EP 2 524 722 B1**
(45) Date of publication and mention of the grant of the patent: **19.02.2014**
(21) Application number: 12160659.4
(22) Date of filing: 22.03.2012
(51) Int. Cl.: B01D 3/00, B01D 3/36, B01D 3/40

(54) **Device for semi-dry congruent dehydration of bioethanol**
Verfahren zur halbtrockenen kongruenten Dehydrierung von Bioethanol
Dispositif de déshydratation congruente semi-sèche de bioéthanol

(30) Priority: 16.05.2011 LV 110068
(43) Date of publication of application: 21.11.2012
(73) Proprietor: LLU Agentura Lauksaimniecibas Tehnikas Zinatniskais Instituts (LLU LTZI), 2130 Ulbroka (LV)
(72) Inventor: Brêmers, Gunãrs, LV-3001 Jelgava (LV); Rucins, Ãdolfs, LV-2130 Ulbroka (LV); Baltins, Arturs, LV-1006 Riga (LV); Birzietis, Gints, LV-3001 Jelgava (LV); Zihmane-Ritina, Kristine, LV-1067 Riga (LV); Skéle, Arnolds, LV-1050 Riga (LV); Bergs, Juris, LV-2130 Stopinu novads (LV)
(74) Representative: Fortuna, Jevgenijs

(56) References cited:
- EP-A1- 1 920 809
- EP-A1- 2 316 549
- US-A- 2 696 305
- US-A- 5 565 066

## Description

### Technical field

The invention relates to the alcohol industry, in particular, to the devices for bioethanol dehydration.

### Background Art

There is known device for bioethanol dehydration (EP2316549), based on the principle of simultaneous water adsorption and rectification in pouring or downward moving moist granular adsorbent layer. The known device comprises the rectification and adsorption block and the adsorbent recovery block, which is adapted for drying the adsorbent granules discharged from the rectification and adsorption block and for their reuse in the rectification and adsorption block, where the rectification and adsorption block in its upper part comprises an adsorbent granules moistening unit having an open lower end, wherein the upper part of said block is connected to an active adsorbent granules supply with ability to feed the adsorbent granules to the rectification and adsorption block and is provided with a liquid dispenser, which is adapted for splashing the adsorbent granules being fed into the block with the alcohol solution. At the top the rectification and adsorption block is equipped with an outlet adapted for discharging the absolute alcohol vapor from it, but at the middle part of the rectification and adsorption block an inlet for supplying of alcohol to be dehydrated, is connected, which is formed with the ability to feed the alcohol being in vapor phase to be dehydrated in the rectification and adsorption block; above the level, where azeotropic concentration of alcohol is occurring in the rectification and adsorption block, a filter is being mounted, which is adapted for separation of the surplus liquid from the adsorbent granules; the filter's outlet is being connected to a liquid dispenser with ability to direct the liquid discharged from the filter to the liquid dispenser; at the bottom the rectification and adsorption block is being provided with a means for discharging of water bound adsorbent granules and their delivery to the adsorbent granules recovery block. A disadvantage of the known device is relatively high power consumption due to heaters included in the device provided for drying the granules and overheating the feeding steam. In addition, the flat heating surface of the granules recovery block can be significantly deformed at high temperatures (up to 600° C), so interfering the smooth pouring of the adsorbent granules, as well the mechanical strength of the heating surface can be decreased. The productivity of the device can be improved either by increasing the flat heating surface area, which further reduces the mechanical strength of the heating surface area, or by increasing the height of the device, which will require higher premises of installation. The active heating surface area cannot be changed during the use of the device.

### Disclosure of Invention

The aim of the invention is to optimize construction of the known device for semi-dry congruent dehydration of bioethanol and reduce the energy consumption that is needed for dehydration. In particular, the aim of the invention is to optimize the bioethanol dehydration block by improving the process of wetting the water bound adsorbent granules with over-azeotropic concentration of the alcohol solution and by improving the construction of water bound adsorbent granules regenerator, creating it mechanically more stable and technologically safer in comparison with the closest prior art.

The objective is achieved:
- by attaching to the bioethanol dehydration block the primary wetting and cooling block having sieve-type spiral turns inserted therein, designed to set granules downward spiral motion, and vertical motion (granules recurrently crossing) to the alcohol solution with high concentration which is added to the primary wetting and cooling block, adapted to moisten granules on sieve-type spiral chute by alcohol solution,
- using of slant pipes lattice in the construction of water bound adsorbent granules regenerator,
- by creating the regenerator adapted to discharge the vapor separated from the granules being regenerated from the recovery block in a number of levels, which enables to select the desired discharged vapor content (alcohol admixture) and temperature, as well as
- by direct association of the bioethanol dehydration block and adsorbent granules recovery block, enabling partial use of recovery block's secondary heat in the bioethanol dehydration block (the two connected blocks are spatially separated from each other due to safety considerations so as to isolate the high alcohol concentration area from the elevated temperature area).

By changing the number of pipes and their compactness in the grid, the device volume usage productivity and device productivity can be changed over a wide range. The mechanical strength of a pipe lattice is higher than that of flat surfaces. The material expenditures of heating surfaces production for pipes construction in case of equal space areas and mechanical durability is less if compared with flat surfaces construction. In places of pipes and manifold junctures granules are mixing better due to change of movement direction, enabling the alignment of the course of drying process. As granules being regenerated can be moved along the device in several flows, it is possible to control the active heating surface and size by connecting or disconnecting some of the flows.

### Brief Description of Drawings

Fig. 1 shows the perspective view of the proposed device's block scheme;
Fig. 2 shows the principal scheme of the device's dehydration block;
Fig. 3 - is the scheme of the adsorbent granules recovery block; 3A - frontal view,
cross-section, 3B - side view, cross-section, 3C - top view, cross-section;
Fig. 4 - is the scheme of the active water adsorbent granules feeding unit;
Fig. 5 is the scheme of the second embodiment of the water adsorbent granules feeding unit.

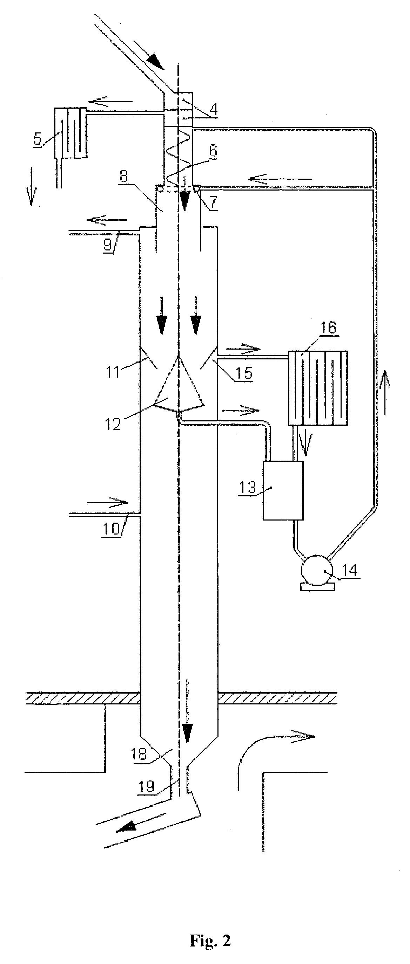

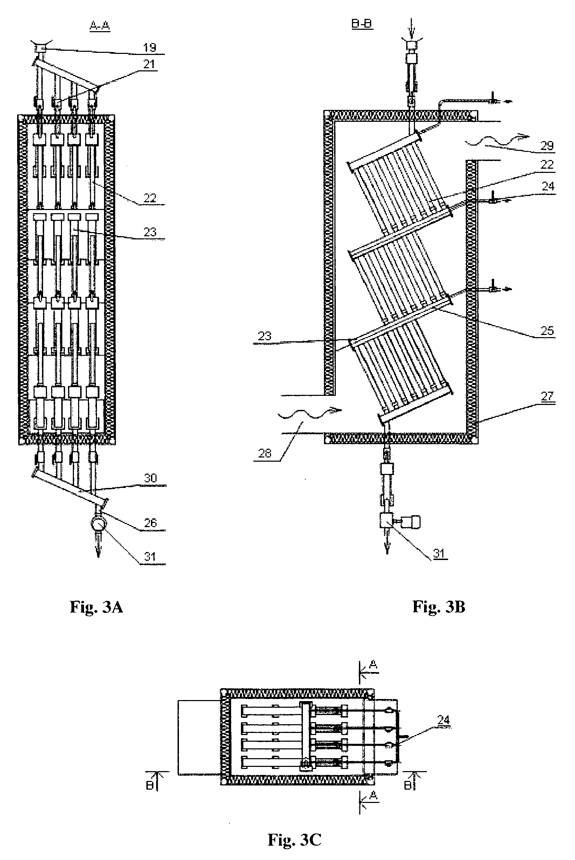

The proposed device, which is the improvement of the device described in the patent No. EP2316549, comprises: a bioethanol dehydration block 1 (Fig.2), a used (spent) water adsorbent granules recovery block 2 (Fig. 3) and a conveyor 3 of regenerated granules, which is adapted for directing adsorbent granules discharged from block 2 to block 1 for the re-use. The circuit of the proposed device for liquid, vapor and granules transfer has, preferably, hermetic insulation to prevent loss of alcohol and heat.

A part of the bioethanol dehydration device (block 1) is a column, which is analogous to the filling-type rectifying column. Column size is determined by using the calculation methodology of filling-type rectifying columns (V.N. Stabnikov. Peregonka i rektifikacija spirta. Edition 2, 1969, 456 p.). It is performed for the alcohol concentration range between 0 and 90 %, in which the rectifying process prevail. In column up to the alcohol concentration 97.2 % vol. both processes - rectifying and water adsorption can occur, while above the azeotropic concentration 97.2% only adsorption can occur. The number of enhancement levels, required for alcohol concentration increase up to 90%, is calculated by using the conventional methodology (V.N. Stabnikov. Peregonka i rektifikacija spirta. Edition 2, 1969, 456 p.), while for the concentration between 90% and 100% it can be determined by using the scheme of the principle of bioethanol semi-dry congruent dehydration given in EP2316549 (Fig.3).

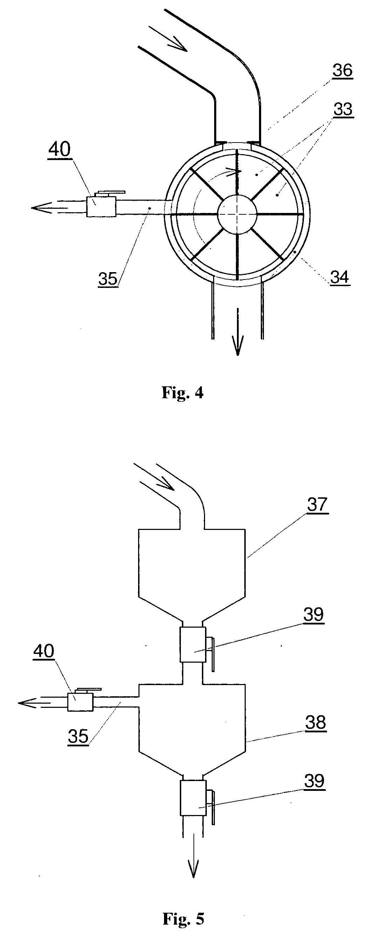

According to the preferable embodiment of the invention, block 1 comprises: an active water adsorbent granules feeding and sealing unit 4, a vapor condenser 5, a granules primary wetting and cooling block 6 having sieve-type spiral turns placed therein (the spiral can be made from perforated sheet metal), a liquid dispenser 7, a granules moistening block 8 having open bottom end, a final product vapor flow outlet 9, a feeding input 10, guiding funnels 11, a filter 12, a collecting reservoir 13, a pump 14, pockets 15, created below the guiding funnels 11, a vapor condenser 16, a bottom 18 of the block 1, a granules outlet neck 19. The block 2 comprises: valves 21, a slant pipes lattice 22, being interconnected by slant collector tubes 23, vapor outlets 24, being adapted for discharge from block 2 of vapor being separated from granules, a flue gas flow direction changing shelves 25, a regenerated granules outlet 26 (Fig. 4), heat resistant chamber having heat-insulating housing 27, a hot flue gas channel 28, being adapted for feeding hot flue gas to lower chamber of the block 2, a flue gas outlet 29, being adapted for flue gas discharge from block 2, a regenerated granules collector 30, a regenerated granules dispenser 31.

The results of experimental testing of a sluice gate designed for sealing of upper part of the device described in the patent EP 2316549 have led to the finding, that the increased crushing of granules occurs, causing an increase of granules small particles admixture. This can cause the device failure. To prevent this two variants of the unit 4 are proposed (Fig. 4 and 5).

According to the first embodiment granules feeding unit 4 may comprise an amended rotational type sluice gate (Fig. 4). The known sluice gate 34 in the granules input being equipped by a diaphragm 36 (preferably having eccentric opening), designed to regulate granules inflow to sluice gate chambers 33, so that chamber would not be completely filled in. In addition, the housing part of the sluice gate 34, wherein chamber 33 upward motion occurs (which chamber being unloaded, but still filled with alcohol vapor), is being provided with alcohol vapor outlet 35, which is disconnectably connected with vapor condenser 5.

According to the second embodiment (Fig. 5), the unit 4 contains two chambers (small containers) 37 and 38 being placed one below the other and interconnected between themselves and with the upper part of the block 1 by piping with hermetic valves 39, where chamber 38 being located lower is connected to the alcohol vapor outlet 35 being disconnectably connected with vapor condenser 5. This solution constructively is simpler, because there are less movable elements and is not necessary to apply automatic alignment with operation of granules outlet dispenser (doser). However in this embodiment the operation of the unit is periodic, that requires its automatic control.

The unit 4 is adapted for feeding active water adsorbent granules in the block 1 and is connected with granules primary wetting and cooling block 6, being connected with granules moistening block 8 with ability to provide water adsorbent granules free downward movement in the direction of outlet neck 19 in the block 1. In order to reduce loss of alcohol in the device, the unit 4 may be disconnectably connected with the vapor condenser 5 with ability to direct the alcohol vapor flown in chambers from the unit 4 to the condenser 5 being adapted to collect, condense alcohol vapor and return it back in the technological process (for example, to the feeding input 10). Stopping of alcohol vapor discharge from the unit 4 may be ensured by shutter 40.

The sieve-type spiral turns inserted in the block 6 are designed with ability to set granules downward spiral motion, but high concentration alcohol solution - set substantially vertical motion downward through the sieve-type spirals holes (openings). In the top of the granules moistening block 8 the liquid dispenser 7 is inserted, being adapted for moistening of granules with high concentration of alcohol solution. At the top (where alcohol concentration is close to the absolute - from 99% to 100%) block 1 is provided with outlet 9 for discharge of absolute alcohol vapor from it, and at the middle part of the block 1 the feeding input 10 is connected for supply of the alcohol to be dehydrated; the input 10 is being designed with ability to feed in the block 1 alcohol to be dehydrated in the form of vapor. By the middle part of the block 1 the part of the block 1 is understood, where such alcohol vapor concentration occurs, that corresponds to the concentration of the alcohol vapor to be dehydrated. Above the level, where alcohol azeotropic concentration occurs in the block 1, the filter 12 is being put, adapted to make possible separation of free liquid flowing off adsorbent granules. The outlet of the filter 12 is connected with the means for supplying high concentration of alcohol solution in the top of the block 6 and/or with the liquid dispenser 7, preferably, with a pump 14 (may be also through intermediate fluid collecting reservoir 13, being connected with the means for supplying alcohol solution to the upper part of the block 6 and/or with the liquid dispenser 7), with ability to direct back liquid discharged from the filter 12 to the alcohol solution supply in the upper part of the block 6 and/or to liquid dispenser 7. The guiding funnel 11 with ability to guide the adsorbent granules and liquid mass to the working surfaces of the filter 12 may be provided above the filter 12 in the block 1. The filter 12 may be a torpedo-shaped filter as described in the patent EP 2316549. Pockets 15, created below the guiding funnel 11, may be connected with collecting reservoir 13, preferably via vapor condenser 16, with ability to direct intermediate product's vapor, accumulating in the pockets 15 to the condenser 16 and the resulting condensate - back to the alcohol solution supply in the upper part of the block 6 and/or to the liquid dispenser 7.

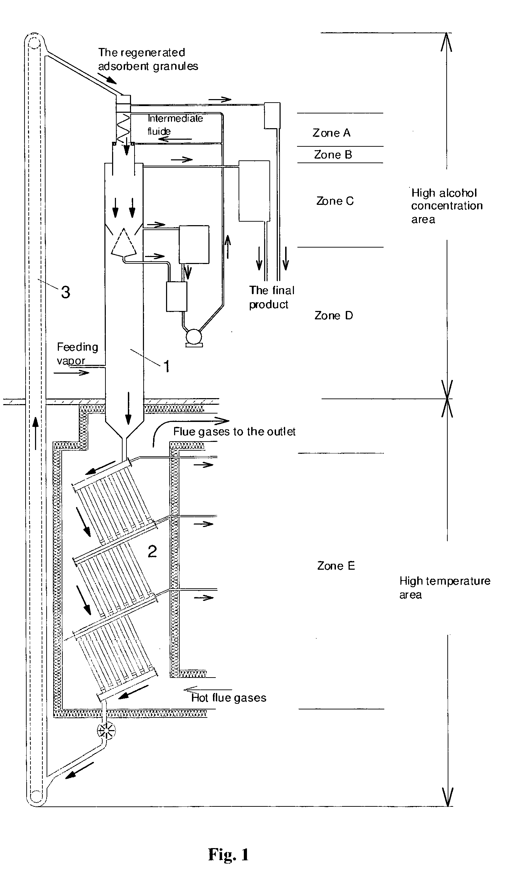

The used adsorbent granules recovery block 2 is directly connected to the bottom part of the dehydration block 1; the bottom 18 of the block 1 and/or the outlet neck 19 may be located in the upper part of the block 2 - in the flue gas outlet 29 or the hot flue gas chamber (Fig. 1). However due to safety considerations the connected blocks 1 and 2 are spatially separated from each other to isolate high alcohol concentration area from elevated temperature area. Due to such device construction, part of overheated vapor derived by evaporation of water in adsorbed granules during bioethanol dehydration process flows from granules recovery block 2 into the bottom of the block 1. For this reason heaters designed for drying the granules and overheating the feeding steam included in the construction described in EP2316549 are not needed. Thus feeding of overheated water vapor for alcohol residue separation from granules at the bottom of the bioethanol dehydration block also is not needed, because the same overheated steam resulting in granules regeneration process serves for this purpose.

The block's 2 structural design is based on a slant pipes lattice mutually interconnected by slant collectors (Fig. 3). The block 2 is adapted for feeding heat (hot flue gas) to lower chamber of the block 2 through the channel 28 and for discharge flue gas through the outlet 29. The slant pipes lattices 22 interconnected by slant collector tubes 23 as shown in Fig. 3 are placed in the hot flue gas chamber of the block 2. The total length of tubes in the lattice is calculated by defining the time period of granules staying in the regenerator (e.g. 30 minutes) and the minimum pipe diameter that ensures its free movement. The free movement of granules inside the pipes lattice is determined by natural downward movement/pouring angle of granules material, which angle depends on granules size and its moisture, and can be determined experimentally. Collector tubes 23 are placed slant, one below the other, preferably in parallel, and being connected with a number of pipe lattices 22 placed between them slant, preferably in parallel, with ability to provide granules gradual motion from the outlet neck 19 of the block 1 to the regenerated granules collector 30, the regenerated granules outlet 26 and regenerated granules dispenser 31 at the bottom of the block 2 (outside of the housing 27 of the chamber). The upper ends of the collector tubes 23 are connected to vapor outlets 24, being adapted for controllable discharge from the block 2 of water or diluted alcohol vapor separated from granules. The vapor outlets 24 may be provided with valves.

A number of vapor outlets 24 in different granules recovery block levels enable to detect the frontier, where presence of alcohol admixture starts, and to control selection of the outlet, for evacuation of vapor as residual product of the bioethanol dehydration process from the device. The vapor discharged from the very lower level will contain only water; vapor discharged from higher collectors may contain some addition of alcohol. The higher level of the collector is, the higher amount of alcohol in vapor will be. The lattice collectors not only enable to easily discharge vapor from the required level of the regenerator, but also ensure mixing of granules pouring out from the numerous lattice pipes 22, ensuring alignment of drying process.

For the control of vapor flow being discharged through the vapor outlets 24, the adjustment valves are provided. The secondary vapor separated from granules, after its exhaustion from vapor outlets 24 may be further discharged for utilization. An injector operable by compressed water steam may be used for removing the secondary vapor. Then the mixture of two vapors may be used for the heating of mash distillation column.

If the separated vapor technologically is used for the mash column heating, a small addition of alcohol (up to 1%) is acceptable and this option is energetically more favorable, because in this case the secondary steam will be used for the heating of the mash distillation device. If vapor is used for other purposes or discharged as residual product in the air, addition of alcohol causes the losses of alcohol. In this case the vapor has to be discharged from the lower chamber, where the vapor has no addition of alcohol.

The flue gas flow direction changing shelves 25 are mounted in the hot flue gas chamber (preferably - along the collector tubes' 23 heating surfaces); the shelves 25 being adapted for flue gas directing to the outlet 29 by zigzag line or spiral like trajectory, thus effectively using flue gas energy potential and heating the collector tubes 23, pipe lattice 22 and, respectively, - adsorbent granules. The spaces between the shelves 25 changing the flue gas direction form chambers. The number of chambers is determined by the required device productivity and selected number of pipes in the lattice 22. The number of chambers may be reduced, if the speed of granules pouring in the grid of tubes is reduced. This can be achieved by mounting larger number of pipes in the lattice.

Granules flow speed in the block 2 and, simultaneously, in the entire device is controlled by changing the number of rotations per unit of time of the granules discharge device's (dispenser 31) rotor.

For changing the device productivity, the granules regenerator 2 is assembled with increased or reduced number of lattice tubes 22, as well by changing the number of flows and chambers. Figs. 3A-3C show the embodiment of three chambers with four flows, but there may be also embodiments with two, three, five etc. flows and chambers. Also in the shown multi-flow device any flow can be stopped by closing valves 21.

The regenerated hot granules can be discharged from the water adsorbent granules recovery block 2 by regulating the flow with the rotational dispenser 31, which may be designed similar to the granules feeding sluice gate (Fig. 4).

Feeding of regenerated granules from the block 2 to the block 1 is ensured by using the granules transporting means 3. According to the preferred embodiment the transporting means 3 (Fig. 1) is a known bucket elevator with a heat resistant towing element - a chain. It is provided with thermally insulated casing being adapted to prevent granules cooling during transportation and to better maintain the required potency for alcohol vapor forming in the granules wetting blocks 6 and 8.

There are the following functional in the device (Fig. 1): A - a granules primary wetting and cooling zone; B - a granules secondary wetting zone, a zone of adsorption dehydration of alcohol liquid and vapor phases at the downward (reversible) vapor movement; C - a alcohol adsorption dehydration zone at upward vapor movement; D - a alcohol rectification zone; E - a zone of liquid absorbed by granules evaporation, the resulting vapor overheating zone.

In the zone A dry, hot, active granules introduced in the device in the primary wetting block 6 (Fig. 2) are moistened by intermediate fluid, which is removed from the middle part of the bioethanol dehydration block 1, where alcohol concentration in the liquid is about 98%. Liquid being fed in the hot granules is boiling and vaporizing, as a result the granules are cooled off to the boiling temperature of the liquid (∼80°), where water binding to the granules may occur.

Along with continuation of granules wetting by intermediate fluid and at temperature below the temperature of water vapor condensation, water adsorption from liquid and vapor phases occurs in the zone B. Under impact of released adsorption heat additional vapor occurs, which joins vapor arising in zone A, and, since the device upper part is sealed off by the block's 4 sealing system, said vapor instead of flowing upwards is forced to move down (reversible). This dehydrated steam being released from the major part of water admixture, leaves zone B through the open bottom end of the wetting block 8 and flows to the final product outlet 9.

The downward moving water absorbent granules in zone C are not yet saturated and they still retain partial water-binding potential, so there the release of condensate of up-flowing steam, as well down-moving steam, fed through feeding input 10, from water occurs by the way of adsorption - the bioethanol adsorptive dehydration. In this zone the alcohol concentration is above the azeotropic - 97.2%.

Alcohol concentration in zone D is below the azeotropic, therefore, although due to granules saturation water adsorptions process abates, alcohol concentration however increases as a result of occurring there rectification process.

In zone E water bound granules drying occurs, and, since water discharge from granules occurs at temperature being above the boiling point of water, the steam released overheats. This steam is being removed in a number of levels from the zone E. The steam released in the higher level is being fed back to the zone D, so as to maintain and ensure the alcohol rectifying process occurring there. The steam released in the middle level is being removed from the device as a residual product of bioethanol dehydration. Vapor overheated at higher temperature and released in the lower level is not being removed from the device in its standard working conditions, however flowing through the higher wet granules layer having lower temperature, it, together with heat supplied from flue gas through pipes lattice walls, ensures the release of water from granules, that is, takes part in granules drying process.

The intermediate product - the alcohol solution with high concentration (97.5-98%) is fed in the top of the block 6 (from the collecting reservoir 13). Primary wetting of granules being in the block 6 is performed with this solution. The spiral turns contained in the block 6 set granules a movement vector along a spiral downward, while the alcohol solution passes through the sieve-type spiral vertically downward, enabling better granules thoroughly wetting with alcohol by mutual intersection of the two flows. By getting covered with a liquid layer the surface of granules attracts smaller particles of the adsorbent, thus preventing the release of dust and getting into the final product vapor. The cooling of granules occurs naturally as the result of evaporation of the part of the liquid fed.

Due to granules increased temperature part of the liquid fed evaporates in the granules primary wetting and cooling block 6. This results in steam, and the temperature drops down to the level of the boiling point of the liquid. As it is alcohol solution with high concentration, its boiling point is below the water steam condensation temperature, and the cooled granules become able to absorb water from the fed alcohol - water solution, thus dehydrating it. By use of the liquid dispenser 7 located in the upper part of the block 8 water adsorbent granules are additionally richly moistened up to the state where the surplus liquid leaks, still by the same intermediate fluid, taken from the middle part of the column and having alcohol concentration from 97.5 to 98 % vol. The bioethanol dehydration process started in the granules primary wetting and cooling block 6 continues there, resulting in release of adsorption heat, enabling additional liquid evaporation. The vapor so arose along with the vapor arose higher - in the primary moistening block 6, flows downwards through the active water adsorbent granules layer, wherein its dehydration process occurs. The dehydrated steam from the secondary moistening block 8 passes through its open bottom end, joining the final product vapor flow from the column to the outlet 9. Experience shows, that the increase of alcohol concentration in granules moistening blocks may reach even 4%, and, thus, there could be used also 96% concentration intermediate product, however due to safety considerations for obtaining the bioethanol condition intermediate product with concentration from 97.5 to 98% is used, achieving the increase of alcohol concentration from 2 to 2,5% in these blocks.

The liquid fed in the blocks 6 and 8 being still not evaporated there, in the zone C flows downwards, contacting with the upwards flowing vapor. In such a contact mass exchange occurs between liquid and vapor phases. Water adsorption still continues in this zone. As a result alcohol concentration in liquid in the downward direction is decreasing, and in vapor moving upwards still is increasing. However, alcohol concentration in both phases throughout in the zone C exceeds the level of azeotropic concentration 97.2%. In order to prevent the downward flowing liquid with concentration above the azeotropic from getting into the dehydration block rectifying zone D, which may interfere normal course of the rectifying process occurring there, the major part of the freely draining off liquid is separated by the use of filter 12 at the lower frontier of the over-azeotropic zone, where liquid concentration is from 97.5 to 98% vol. Simultaneously - the separated liquid is used for granules cooling and wetting by pumping this liquid to the device upper blocks (6 and 8). The liquid separation process is supported by the guiding funnel 11, which shifts (guides) granules and liquid mass to the filter 12 working surface. The separated intermediate fluid is discharged from the column in order to feed it back by the pump 14 to the both granules moistening blocks via the collecting reservoir 13. The retention of the surplus liquid at the level of the torpedo-shaped filter is ensured by the vapor flow free zone reduction formed in this cross-section due to the volume occupied by the torpedo-shaped filter, because, due to the decrease of the free flow zone, the vapor flow rate increases and the additional dynamic pressure caused by it prevents liquid flowing down in the column, and enables said liquid passing through the holes of the filter. After being collected the surplus liquid is directed to the wetting blocks and subjected to bioethanol dehydration.

Part of liquid evaporates in granules moistening blocks 6 and 8. To compensate it, the required amount of the intermediate product vapor is discharged from the pockets 15 being formed below the guiding funnel 11 and liquefied in the condenser 16. The liquid thus obtained is being fed into the collecting reservoir 13, from where it is delivered to the granules wetting blocks using the pump 14. Granules movement downward easily occurs either because of the presence of surplus of freely draining off liquid or being in a dried off way (up to 25% of the liquid content). Being in the medium state granules are sticky; that may interfere their free movement. The surplus, draining off liquid together with granules in the column are at the level above the torpedo-shaped filter 12, in zone C (with over-azeotropic concentration of alcohol). After the separation of the surplus liquid in the filter 12, granules movement is enabled by the pressure, formed by the mass of the layer below the filter level. The critical zone for the granules movement is the bottom of the column 18, where granules through the reduced cross-sectional zone - outlet neck 19 have to be directed to the regenerator 2. The wet granules motion there is enabled by the effect of two factors: the drying of granules, that is achieved by heating of the outlet neck 19 from outside through the bottom of the construction of the column's wall with the residual heat of the outflowing flue gas, and by the drying off granules being in the outlet neck - by contacting with flow of the overheated vapor, arising in the upper chamber of the granules recovery block and flowing in opposite (oncoming) direction to the granules movement. The dried off granules through the column's bottom outlet 19 are being fed to the recovery block 2. The thermal removal of water from the adsorbed zeolite granules is performed at the temperature from 100 to 400°C. The lowest temperature in the block 2 is in the granules being recovered feeding site, the highest - at the regenerated granules discharge. As the operating temperature is high, the flue gases directly from furnace having temperature up to 600° C are used as heat carrier. The hot flue gases are fed into the lower chamber and therefore there is the highest temperature (500-600°C). When flowing to the higher chambers the flue gas temperature is naturally decreasing; in the upper chamber it does not exceed 120°C. The temperature has to be controlled and its limitations should be observed also due to safety reasons, because moving from dehydration column to the regenerator some amount of alcohol may get into the top of the recovery block (the alcohol concentration of the liquid not exceeding 1%) together with granules. At the top of the regenerator the low concentration alcohol solution evaporates and steam is formed, in which alcohol concentration, according to conformity with natural course of distillation process reaches 10%. This steam flows upwards and gets into the bottom of the bioethanol dehydration column, where it takes part in the rectification process ongoing in the column.

The heat required for the evaporation of water bound in granules is produced in the furnace, from which the hot flue gas is fed into the lower chamber of the block 2 through the channel 28. For the reduction of heat loss the regenerator 2 is contained in housing 27, being covered from outside, and in the zone where the hot (600 °C) flue gases flows into - also from inside - with a layer of insulating material.

Granules inflow into the unit 4, by using the sluice gate (Fig. 4), is controlled so as the chambers 33 are not completely filled. This will prevent granules friction against the sluice gate housing circumferential inner surfaces and allow to freely roll (rotate), reducing the possibility of their shredding. By becoming filed with alcohol vapor, the chamber 33 is under pressure, and by connecting the space of the chamber 33 with the outlet 35 being connected with the (vacuumized) condenser 5, the vapor from the chamber 33 is pumped out. The return of condensate to the technological process (for example, to the feeding input 10) prevents the losses of alcohol.

In case of the two chamber embodiment (Fig. 5) of the unit 4 granules inflow to the unit 4 is controlled by the valves 39. The collecting of alcohol vapor is performed through the outlet 35, so reducing the losses of alcohol.

## Claims

1. A device for bioethanol dehydration, comprising a bioethanol dehydration block (1), an adsorbent granules recovery block (2), being adapted for drying adsorbent granules discharged from the block (1), and a regenerated granules conveyor (3), being adapted for directing the regenerated granules to the block (1) for the re-use, wherein the block (1) is a rectifying column without plates, which at the top contains a granules wetting block (8) having an open bottom part, the block (8) being adapted for feeding the active adsorbent granules in it and is provided with a liquid dispenser (7), which is adapted for splashing adsorbent granules being fed into the block (8) by the alcohol solution; at the top the block (1) is provided with an outlet (9) for discharging absolute alcohol vapor from it, but at the middle part of the block (1) an input (10) is connected for supplying alcohol to be dehydrated in a form of vapor into the block (1); above the level, at which alcohol azeotropic concentration in the block (1) is occurring, a filter (12) is being mounted, being adapted for separation of the surplus liquid from the adsorbent granules; the filter's (12) outlet is connected with a liquid dispenser (7), optionally through a collecting reservoir (13), being connected with the liquid dispenser (7), with ability to direct the liquid discharged from the filter (12) to the liquid dispenser (7); at the bottom the block (1) is equipped with a means for discharging of water bound adsorbent granules and their delivery to the adsorbent granules recovery block (2), **characterized in that** the upper part of the block (8) is connected with the granules primary wetting and cooling block (6) adapted for providing the water bound adsorbent granules free movement downward in the block (1), wherein the block (6) is provided with means for supplying solution with high alcohol concentration, said means being adapted for moistening the granules by the alcohol solution in the block (6), wherein the block (6) is further provided with sieve-type spiral chute adapted for setting granules downward spiral motion, and the alcohol solution - substantially vertical motion in the downward direction through the sieve-type spirals holes.

2. The device according to claim 1, **characterized in that** bottom (18) of the block (1) and/or the outlet neck (19) are located in the flue gas outlet (29) of the block (2) or in the hot flue gas chamber.

3. The device according to claim 1 or 2, **characterized in that** outlet of the filter (12) or collecting reservoir (13) is additionally connected with the means for supplying solution at the upper part of the block (6), said means being adapted to direct liquid discharged from the filter (12) or the reservoir (13) to the block (6).

4. The device according to any of the preceding claims, **characterized in that** block (6) at the upper part is connected with active water adsorbent granules feeding unit (4) adapted to provide granules free movement downward in the block (1), wherein the unit (4) is connected with the condenser (5) such as to allow directing the alcohol vapor being collected in chambers of the unit (4) to the condenser (5), which is being adapted for alcohol vapor collecting and feeding back in the block (1).

5. The device according to any of the preceding claims, **characterized in that** the conveyor (3) is thermally isolated chain bucket elevator, adapted for conveying water adsorbent granules being regenerated in the block (2) to the block (1) and adapted to limit granules cooling during their conveying.

6. The device according to any of the preceding claims, **characterized in that** it further comprises a guiding funnel (11) being located above the filter (12) in the block (1) and adapted for directing adsorbent granules and liquid mass to the working surfaces of the filter (12).

7. The device according to any of the preceding claims, **characterized in that** outlet of the filter (12) or the reservoir (13) is connected with a pump (14) with ability to pump the liquid being discharged from the filter (12) to the liquid dispenser (7) and/or the solution supply to the block (6), or from the filter (12) to the reservoir (13) and then from the reservoir (13) to the liquid dispenser (7) and/or to the solution supply in the block (6).

8. The device according to any of the preceding claims, **characterized in that** block (1) is provided with a vapor condenser (16), which input is being connected with pockets (15) formed below the guiding funnels (11), and the output - with the reservoir (13), or the liquid dispenser (7) and/or the means for the solution supply to block (6) with ability to direct vapor from the pockets (15) to the condenser (16), but from the condenser (16) - direct condensate to the liquid dispenser (7) and/or to the solution supply in the block (6), optionally through the reservoir (13).

9. The device according to any of the preceding claims where the used water adsorbent granules recovery block (2) includes the hot flue gas thermally insulated chamber with channel (28), being adapted for bringing in hot flue gases, the outlet (29) for discharging flue gas from the block (2), shelves (25) being mounted in the hot flue gas chamber and being adapted for the change of flue gas flow direction, achieving longer flue gas movement path in the hot flue gas chamber, and the granules transfer chamber located in the hot flue gas chamber; said granules transfer chamber having wet granules input, being connected with the outlet neck (19) of the block (1) and the active granules outlet, being connected with the regenerated granules conveyor (3), **characterized in that** granules transfer chamber is a system of collector tubes (23) and pipes lattices (22), wherein the collector tubes (23) are placed slantwise, one below the other, preferably in parallel, and are being connected with placed between them slantwise, preferably in parallel, pipes lattices (22), with ability to provide granules gradual motion from the outlet neck (19) to the regenerated granules collector (30) at the bottom of the block (2), wherein the upper ends of the collector tubes (23) are connected with vapor outlets (24), being adapted to discharge from the block (2) the diluted alcohol vapor separated from the granules.

10. The device according to claim 9, **characterized in that** the system of collector tubes (23) and pipes lattices (22) is provided with means (21) being adapted for the controllable adjustment of granules flow.

11. The device according to claim 9 or 10, **characterized in that** the vapor outlets (24) are provided with adjustment/disconnection valves.

12. The device according to claim 4, **characterized in that** the granules feeding unit (4) contains rotational-type sluice gate (34), being provided with a diaphragm (36) in the granules input, preferably with eccentric opening, adapted for regulation of granules inlet to the sluice gate chambers (33), wherein the housing part of the sluice gate (34) is provided with alcohol vapor outlet (35) at the part where upward movement of the chambers (33), being unloaded, but still filled with alcohol vapor, occurs; the outlet (35) is being connected with the condenser (5) and adapted for controllable directing of alcohol vapor to the condenser (5).

13. The device according to claim 4, **characterized in that** the granules feeding unit (4) contains two - placed one below the other reservoirs (37) and (38), being interconnected between themselves and with the upper part of the block (1) by piping with hermetic valves (39), wherein the chamber (38) located lower is being connected with the alcohol vapor outlet (35), in turn being connected with the vapor condenser (5) with ability for controllable directing of alcohol vapor to the condenser (5).

## Patentansprüche

1. Ein Gerät für die Dehydrierung von Bioethanol, ausgestattet mit einem Bioethanol-Dehydrierungsblock (1) und einem Adsorbergranulat-Rückgewinnungsblock (2), der das aus dem Block (1) stammende Adsorbergranulat trocknet, und einem Förderband (3), das das regenerierte Granulat in den Block (1) zur Wiederverwendung transportiert, wobei der Block (1) aus einer Rektifikationssäule ohne Platten besteht, die auf ihrer Oberseite mit einem Granulatbefeuchtungsblock (8) ausgerüstet ist und einen offenen Boden hat, so dass das aktive Adsorbergranulat in den Block (8) eingeführt werden kann und von dem im Block befindlichen Flüssigkeitsspender (7) mit einer Alkohollösung besprüht wird; auf der Oberseite des Blocks (1) befindet sich eine Öffnung (9), durch die der absolute Alkoholdampf austreten kann, jedoch im Mittelteil des Blocks (1) gibt es einen Zugang (10), durch den der zu dehydrierende Alkohol in Form von Dampf in den Block (1) einströmt; oberhalb der Höhe, auf der sich die alkohol-azeotrope Konzentration bildet, ist ein Filter (12) montiert, der die überschüssige Flüssigkeit vom Adsorbergranulat trennt; der Filterauslass (12) ist mit dem Flüssigkeitsspender (7) verbunden, optional über ein Sammelbehälter (13), welcher an den Flüssigkeitsspender (7) angeschlossen ist, so dass die aus dem Filter (12) austretende Flüssigkeit in den Flüssigkeitsspender (7) läuft; an der Unterseite des Block (1) befindet sich eine Entleerungsvorrichtung für das wassergebundene Adsorbergranulat, das dem Adsorbergranulat-Rückgewinnungsblock (2) zugeführt wird, ist **dadurch gekennzeichnet, dass** der obere Teil des Blocks (8) mit dem für die primäre Befeuchtung und Kühlung des Granulats vorgesehenen Blocks (6) verbunden ist, in dem das wassergebundene Adsorbergranulat frei nach unten in den Block (1) fällt, wobei der Block (6) mit einer Vorrichtung für die Zugabe einer stark konzentrierten Alkohollösung versehen ist, welche das Granulat mit der Alkohollösung im Block (6) befeuchtet und sich im Block (6) außerdem eine siebartige Wendelrutsche befindet, die das Granulat und die Alkohollösung in einer spiralförmigen Bewegung - einer im Wesentlichen vertikalen Bewegung - durch die siebartigen, spiralförmigen Löcher nach unten befördert.

2. Das Gerät gemäß Anspruch 1 ist **dadurch gekennzeichnet, dass** sich der Boden (18) des Blocks (1) und/oder der Auslaufstutzen (19) im Abgasauslass (29) des Blocks (2) oder in der heißen Rauchgaskammer befinden.

3. Das Gerät gemäß Anspruch 1 oder 2 ist **dadurch gekennzeichnet, dass** der Auslass des Filters (12) oder des Sammelbehälters (13) zusätzlich an eine Vorrichtung angeschlossen ist, die die Lösung in den oberen Teil des Blocks (6) befördert und die besagte Vorrichtung die Aufgabe hat, die aus dem Filter (12) oder dem Behälter (13) austretende Flüssigkeit in Block (6) zu leiten.

4. Das Gerät gemäß den vorhergehenden Ansprüchen ist **dadurch gekennzeichnet, dass** Block (6) im oberen Teil mit einer Versorgungseinrichtung (4) für aktives wasseradsorbierendes Granulat verbunden ist, durch die das Granulat in freier Bewegung nach unten in den Block (1) fällt, wobei die Versorgungseinrichtung (4) an einen Kondensator (5) angeschlossen ist, so dass der Alkoholdampf, der sich in den Kammern der Versorgungseinrichtung (4) sammelt, zum Kondensator (5) strömen kann, welcher Alkohol sammelt und in den Block (1) zurückführt.

5. Das Gerät gemäß den vorhergehenden Ansprüchen ist **dadurch gekennzeichnet, dass** es sich beim Förderband (3) um ein wärmeisoliertes Kettenbrecherwerk handelt, welches das in Block (2) zu regenerierende wasseradsorbierende Granulat zu Block (1) transportiert und so ausgestattet ist, dass sich das Granulat während der Beförderung nur begrenzt abkühlt.

6. Das Gerät gemäß den vorhergehenden Ansprüchen, ist **dadurch gekennzeichnet, dass** es außerdem einen Führungstrichter (11) besitzt, der sich auf dem Filter (12) in Block (1) befindet und so gebaut ist, dass er das Adsorbergranulat und die Flüssigkeitsmenge zu den Arbeitsflächen des Filters (12) befördert.

7. Das Gerät gemäß den vorherigen Ansprüchen, ist **dadurch gekennzeichnet, dass** der Auslass des Filters (12) oder der Behälter (13) mit einer Pumpe (14) verbunden sind, die die aus dem Filter (12) austretende Flüssigkeit in den Flüssigkeitsspender (7) und/oder die Lösungszufuhr in Block (6) oder vom Filter (12) in den Behälter (13) und dann vom Behälter (13) in den Flüssigkeitsspender (7) und/oder die Lösungszufuhr in Block (6) pumpt.

8. Das Gerät gemäß den vorherigen Ansprüchen ist **dadurch gekennzeichnet, dass** Block (1) mit einem Dampfkondensator (16) ausgestattet ist, dessen Eingang mit den Taschen (15) unterhalb der Führungstrichter (11) und der Ausgang - mit Behälter (13) oder der Flüssigkeitsspender (7) und/oder die Vorrichtungen für die Lösungszufuhr in den Block (6) verbunden ist, so dass der Dampf aus den Taschen (15) in den Kondensator (16) strömen kann, jedoch das Kondensat vom Kondensator (16) zum Flüssigkeitsspender (7) und/oder zur Lösungszufuhr in Block (6) - optional über Behälter (13) - fließen kann.

9. Das den vorherigen Ansprüchen entsprechende Gerät ist ausgerüstet mit einer wärmeisolierten Rauchgaskammer und einem Kanal (28), um heiße Rauchgase aufzunehmen und einem Ausgang (29), um Rauchgase aus dem Block (2) auszuleiten, mit Fächern (25), die in der heißen Rauchgaskammer montiert sind und dem Richtungswechsel der Rauchgase dienen, so dass der Rauchgasweg in der heißen Rauchgaskammer länger wird sowie mit einer Granulattransportkammer in der heißen Rauchgaskammer; die besagte Granulattransportkammer verfügt über eine Öffnung für feuchtes Granulat, die mit dem Auslaufstutzen (19) des Blocks (1) und dem aktiven Granulatausgang verbunden und an das Förderband (3) für regeneriertes Granulat angeschlossen ist, ist **dadurch gekennzeichnet, dass** es sich bei der Granulattransportkammer um ein System mit Sammelrohren (23) und Rohrgittern (22) handelt, wobei die Sammelrohre (23) schräg, eines unter dem anderen, vorzugsweise parallel angeordnet sind und die Rohrgitter (22) die Aufgabe haben, das Granulat in einer sanften Bewegung vom Auslaufstutzen (19) zum Kollektor (30) für regeneriertes Granulat am Boden des Blocks (2) zu leiten, wobei die oberen Enden der Sammelrohre (23) mit den Dampfauslässen (24) verbunden sind, damit der gelöste und vom Granulat abgeschiedene Alkoholdampf aus Block (2) strömen kann.

10. Das Gerät gemäß Anspruch 9 ist **dadurch gekennzeichnet, dass** das System der Sammelrohre (23) und Rohrgitter (22) mit Vorrichtungen (21) versehen ist, die eine regulierbare Anpassung des Granulatflusses ermöglichen.

11. Das Gerät gemäß Anspruch 9 oder 10 ist **dadurch gekennzeichnet, dass** die Dampfauslässe (24) mit Justier-/Abschaltventilen versehen sind.

12. Das Gerät gemäß Anspruch 4 ist **dadurch gekennzeichnet, dass** die GranulatVersorgungseinrichtung (4) eine drehbare Schleuse (34) enthält, die mit einer Membran (36) im Granulateingang, vorzugsweise einer außermittigen Öffnung, versehen ist, welche die Granulatzufuhr in die Schleusenkammern (33) regelt, wobei das Gehäuse der Schleuse (34) mit einem Alkoholdampfausgang (35) versehen ist, der sich in dem Teil befindet, welcher bei der Aufwärtsbewegung der noch mit Alkoholdampf gefüllten Kammern (33) entleert wird; der Auslass (35) ist an den Kondensator (5) angeschlossen und reguliert den Alkoholdampfstrom zum Kondensator (5).

13. Das Gerät gemäß Anspruch 4 ist **dadurch gekennzeichnet, dass** die Granulatversorgungseinrichtung (4) zwei untereinander angeordnete Behälter (37) und (38) enthält, die miteinander und mit dem oberen Teil des Blocks (1) durch eine Rohrleitung mit hermetischen Ventilen (39) verbunden sind, wobei die darunter angeordnete Kammer (38) mit dem Alkoholdampfauslass (35) verbunden ist und dieser wiederum mit dem Dampfkondensator (5), so dass der Alkoholdampf in kontrollierter Weise zum Kondensator (5) strömen kann.

## Revendications

1. Dispositif pour la déshydratation du bioéthanol, comprenant un bloc de déshydratation de bioéthanol (1), un bloc de récupération de granules adsorbants (2), étant adapté pour sécher des granules adsorbants déchargés du bloc (1), et un convoyeur à granules régénérés (3), étant adapté pour diriger les granules régénérés vers le bloc (1) pour la réutilisation, dans lequel le bloc (1) est une colonne de rectification dépourvue de plateaux, qui contient au sommet un bloc de mouillage de granules (8) ayant une partie inférieure ouverte, le bloc (8) étant adapté pour alimenter les granules adsorbants actifs à l'intérieur de celui-ci et est pourvu d'un distributeur de liquide (7), qui est adapté pour asperger les granules adsorbants qui sont alimentés dans le bloc (8) de la solution alcoolique ; au-dessus, le bloc (1) est pourvu d'une sortie (9) permettant d'évacuer la vapeur d'alcool absolu de celui-ci, mais au niveau de la partie du milieu du bloc (1), une entrée (10) est reliée pour amener l'alcool destiné à être déshydraté sous une forme de vapeur dans le bloc (1) ; au-dessus du niveau auquel la concentration azéotropique d'alcool dans le bloc (1) se produit, un filtre (12) est monté, étant adapté pour la séparation du surplus de liquide provenant des granules adsorbants ; la sortie du filtre (12) est reliée à un distributeur de liquide (7), éventuellement à travers un réservoir de recueil (13), qui est relié au distributeur de liquide (7), avec la possibilité de diriger le liquide évacué du filtre (12) vers le distributeur de liquide (7) ; en bas, le bloc (1) est équipé d'un moyen pour évacuer les granules adsorbants liés à l'eau et pour leur distribution vers le bloc de récupération de granules adsorbants (2), **caractérisé en ce que** la partie supérieure du bloc (8) est reliée au bloc de mouillage et refroidissement primaires de granules (6) adapté pour fournir le mouvement libre des granules adsorbants liés à l'eau vers le bas dans le bloc (1), le bloc (6) étant pourvu d'un moyen pour fournir à une solution une concentration élevée en alcool, ledit moyen étant adapté pour humidifier les granules par la solution alcoolique dans le bloc (6), le bloc (6) étant en outre pourvu d'une rigole en spirale de type tamis adaptée pour définir un mouvement en spirale vers le bas des granules, et le mouvement sensiblement vertical de la solution alcoolique dans la direction vers le bas à travers les trous des spirales de type tamis.

2. Dispositif selon la revendication 1, **caractérisé en ce que** le bas (18) du bloc (1) et/ou le goulot de sortie (19) sont situés dans la sortie de gaz d'évacuation (29) du bloc (2) ou dans la chambre des gaz d'évacuation chauds.

3. Dispositif selon la revendication 1 ou 2, **caractérisé en ce que** la sortie du filtre (12) ou du réservoir de recueil (13) est reliée en outre au moyen pour amener la solution à la partie supérieure du bloc (6), ledit moyen étant adapté pour diriger le liquide évacué du filtre (12) ou du réservoir (13) vers le bloc (6).

4. Dispositif selon l'une quelconque des revendications précédentes, **caractérisé en ce que** le bloc (6) à la partie supérieure est relié à une unité d'alimentation de granules adsorbant l'eau actifs (4) adaptée pour fournir un mouvement libre des granules vers le bas dans le bloc (1), l'unité (4) étant reliée au condenseur (5) de façon à permettre de diriger la vapeur d'alcool qui est recueillie dans des chambres de l'unité (4) vers le condenseur (5), étant adapté pour le recueil de vapeur d'alcool et son renvoi dans le bloc (1).

5. Dispositif selon l'une quelconque des revendications précédentes, **caractérisé en ce que** le convoyeur (3) est un élévateur à godets à chaîne isolé thermiquement, adapté pour transporter les granules adsorbant l'eau qui sont régénérés dans le bloc (2) vers le bloc (1) et adapté pour limiter le refroidissement des granules pendant leur transport.

6. Dispositif selon l'une quelconque des revendications précédentes, **caractérisé en ce qu'**il comprend en outre un entonnoir de guidage (11) qui est situé au-dessus du filtre (12) dans le bloc (1) et adapté pour diriger les granules adsorbants et la masse liquide vers les surfaces de travail du filtre (12).

7. Dispositif selon l'une quelconque des revendications précédentes, **caractérisé en ce que** la sortie du filtre (12) ou du réservoir (13) est reliée à une pompe (14) avec la possibilité de pomper le liquide qui est évacué du filtre (12) vers le distributeur de liquide (7) et/ou l'alimentation en solution vers le bloc (6), ou à partir du filtre (12) vers le réservoir (13) puis du réservoir (13) vers le distributeur de liquide (7) et/ou vers l'alimentation en solution dans le bloc (6).

8. Dispositif selon l'une quelconque des revendications précédentes, **caractérisé en ce que** le bloc (1) est pourvu d'un condenseur de vapeur (16), dont l'entrée est reliée à des poches (15) formées sous les entonnoirs de guidage (11), et la sortie - avec le réservoir (13), ou le distributeur de liquide (7) et/ou le moyen pour alimenter la solution au bloc (6) avec la possibilité de diriger la vapeur des poches (15) vers le condenseur (16), mais à partir du condenseur (16) - de diriger le condensat vers le distributeur de liquide (7) et/ou vers l'alimentation en solution dans le bloc (6), éventuellement à travers le réservoir (13).

9. Dispositif selon l'une quelconque des revendications précédentes, où le bloc de récupération de granules adsorbant l'eau usagés (2) comprend la chambre à gaz d'évacuation chauds thermiquement isolée avec un canal (28), étant adapté pour faire entrer les gaz d'évacuation chauds, la sortie (29) permettant d'évacuer le gaz d'évacuation du bloc (2), des plateaux (25) étant montés dans la chambre à gaz d'évacuation chauds et étant adaptés pour le changement de direction du flux de gaz d'évacuation, réalisant un plus long trajet de mouvement de gaz d'évacuation dans la chambre à gaz d'évacuation chauds, et la chambre de transfert de granules située dans la chambre à gaz d'évacuation chauds ; ladite chambre de transfert de granules ayant une entrée de granules mouillés, étant connectée au goulot de sortie (19) du bloc (1) et la sortie de granules actifs, étant connectée au convoyeur à granules régénérés (3), **caractérisé en ce que** la chambre de transfert de granules est un système de tubes collecteurs (23) et des réseaux de tuyaux (22), dans lequel les tubes collecteurs (23) sont placés en oblique, l'un en dessous de l'autre, de préférence en parallèle, et sont reliés avec les réseaux de tuyaux (22) placés entre eux en oblique, de préférence en parallèle, avec la capacité de fournir aux granules un mouvement progressif du goulot de sortie (19) au collecteur à granules régénérés (30) en bas du bloc (2), dans lequel les extrémités supérieures des tubes collecteurs (23) sont reliées aux sorties de vapeur (24), étant adaptées pour évacuer du bloc (2) la vapeur d'alcool diluée séparée des granules.

10. Dispositif selon la revendication 9, **caractérisé en ce que** le système de tubes collecteurs (23) et de réseaux de tuyaux (22) est pourvu d'un moyen (21) étant adapté pour l'ajustement réglable du flux de granules.

11. Dispositif selon la revendication 9 ou 10, **caractérisé en ce que** les sorties de vapeur (24) sont pourvues de vannes d'ajustement/déconnexion.

12. Dispositif selon la revendication 4, **caractérisé en ce que** l'unité d'alimentation de granules (4) contient une vanne registre de type rotatif (34), étant pourvue d'une membrane (36) dans l'entrée de granules, de préférence avec une ouverture excentrique, adaptée pour la régulation d'entrée de granules vers la chambre de vanne registre (33), dans lequel la partie de logement de la vanne registre (34) est pourvue d'une sortie de vapeur d'alcool (35) au niveau de la partie où un mouvement vers le haut des chambres (33), étant déchargées, mais toujours remplies de vapeur d'alcool, se produit ; la sortie (35) est reliée au condenseur (5) et adaptée pour diriger de façon contrôlable la vapeur d'alcool vers le condenseur (5).

13. Dispositif selon la revendication 4, **caractérisé en ce que** l'unité d'alimentation de granules (4) contient deux réservoirs placés l'un en dessous de l'autre (37) et (38), étant interconnectées entre eux et avec la partie supérieure du bloc (1) par des conduits avec des vannes hermétiques (39), dans lequel la chambre (38) située plus bas est reliée à la sortie de vapeur d'alcool (35), qui est à son tour reliée au condenseur de vapeur (5) avec la possibilité de diriger de façon contrôlable la vapeur d'alcool vers le condenseur (5).
